# FASCICULE DE BREVET EUROPEEN

(11) **EP 2 632 827 B1**
(45) Date de publication et mention de la délivrance du brevet: **06.08.2014**
(21) Numéro de dépôt: 11787712.6
(22) Date de dépôt: 17.10.2011
(51) Int. Cl.: B65G 21/20, B65G 47/08, B65G 47/84

(54) **UNITÉ RÉGULATRICE VERSATILE POUR FLUX DE RÉCIPIENTS**
VIELSEITIGE REGULIERUNGSEINHEIT FÜR EINEN BEHÄLTERSTROM
VERSATILE REGULATING UNIT FOR A STREAM OF CONTAINERS

(30) Priorité: 28.10.2010 FR 1058903
(43) Date de publication de la demande: 04.09.2013
(73) Titulaire: Sidel Participations, 76930 Octeville sur Mer (FR)
(72) Inventeur: VASSE, Michael, F-76930 Octeville-sur-mer (FR); DANIERE, Lionel, F-76930 Octeville-sur-mer (FR); CHOPLIN, Grégory, F-76930 Octeville-sur-mer (FR)
(74) Mandataire: Cabinet Plasseraud
(86) Numéro de dépôt international: PCT/FR2011/052423
(87) Numéro de publication internationale: WO 2012/056145

(56) Documents cités:
- EP-A1- 1 247 769
- US-A- 2 951 574

## Description

La présente invention concerne, dans le domaine des installations de préparation de lots de récipients du genre bouteilles, une unité qui comporte au moins deux couloirs séparés par des parois dont l'écartement est réglable, chaque couloir étant équipé d'un module de convoyage qui supporte et fait avancer des récipients à réguler, laquelle unité réalise la régulation du flux de récipients au moyen de jeux de doigts et est interposée entre un convoyeur amont et un convoyeur aval, lequel peut être un convoyeur d'alimentation d'une machine de conditionnement, par exemple.

L'invention concerne, plus précisément, un système de réglage qui accommode la position des éléments actifs de cette unité de régulation en fonction de la dimension des récipients qui la traversent.

Le document WO 2010/037959 décrit une unité selon le préambule de la revendication 1. Le document montre une installation qui permet de préparer des lots de bouteilles à partir d'un flux constitué de plusieurs lignes de récipients dont la progression est contrôlée et organisée au niveau d'une unité de régulation qui comporte un système de convoyage comprenant, d'une part, des modules de convoyage à bande sans fin qui sont disposés dans chaque couloir et, d'autre part, des jeux de doigts faisant office de butées, lesquels s'interposent entre deux récipients consécutifs d'une même file, pour contrôler et pour organiser le mouvement d'avancée de ces récipients au niveau de ladite unité de régulation.

Dans le document précité, il est également prévu des moyens pour régler la largeur des couloirs au niveau de l'unité de régulation afin d'adapter cette largeur à la dimension des récipients et ceci de la façon la plus précise possible. Des moyens complémentaires sont également installés, au niveau de chaque module de convoyage pour centrer et maintenir ledit module dans le plan médian de son couloir, et ceci quelle que soit la largeur dudit couloir.

Dans le document WO précité, le centrage du module de convoyage dans son couloir s'effectue automatiquement lors du réglage de la largeur du couloir correspondant au moyen d'un mécanisme comportant une paire d'organes suiveurs, en forme de coins, à mouvements synchronisés, lesquels coins sont en contact avec les parois du couloir correspondant et ils sont guidés dans le support dudit module de convoyage ; ce support comporte des mâchoires dans lesquelles les coins peuvent coulisser et se déployer ou se rétracter selon le mouvement des parois avec lesquelles ils sont en contact. Ces mâchoires sont centrées dans le plan médian du couloir et elles sont contrariées, dans leur mouvement, par un ressort qui tend à plaquer lesdits coins contre les parois du couloir.

Toutefois, on observe des dysfonctionnements au niveau de ces mécanismes avec, parfois, des difficultés pour déplacer les organes suiveurs en forme de coins, lesquels dysfonctionnements proviennent notamment de l'introduction de salissures dans lesdits mécanismes. Ces salissures sont véhiculées par des produits lubrifiants qui sont dispersés sur les tapis ou les bandes des convoyeurs pour réduire les frottements entre les récipients convoyés et lesdits tapis ou bandes.

Le grippage et/ou le blocage des coins du mécanisme de positionnement peut avoir comme conséquence un défaut de centrage des modules de convoyage dans le couloir correspondant ; il peut également perturber le rapprochement des parois lors des changements de format.

Les coins ne sont pas liés, ou fixés, aux parois ; ils sont simplement en appui sur ces parois grâce à la pression qu'exerce le ressort sur les mâchoires porteuses desdits coins. Ces coins sont censés se déplacer automatiquement en suivant le mouvement des parois avec lesquelles ils sont en contact.

La présente invention propose un nouvel aménagement du système de centrage automatique des modules de convoyage, dans leur couloir respectif, lequel aménagement permet de surmonter les difficultés liées à la présence de salissures, au niveau desdits modules de convoyage, et en particulier à l'entrée et à la sortie du module de régulation.

La présente invention propose également, associé à ce système de centrage automatique des modules de convoyage, un système qui permet de régler la largeur de chaque couloir en apportant une précision inégalée au niveau du parallélisme des parois entre elles et au niveau de l'uniformité de leur largeur, lesquels systèmes sont, de préférence combinés pour former ensemble un système de réglage multifonctionnel intégrant ainsi plusieurs fonctions.

L'unité régulatrice selon l'invention comprend, dans une zone située à chacune de ses extrémités, entre deux parois adjacentes, des moyens pour centrer chaque module de convoyage entre les parois qui lui sont adjacentes, lesquels moyens permettent un centrage dudit module qui est à la fois automatique et synchronisé avec le mouvement desdites parois adjacentes et ces moyens sont constitués de bras de même longueur formant des compas entre deux parois adjacentes, lesquels compas sont articulés à leurs extrémités sur lesdites parois adjacentes, à un même niveau et sur une même ligne horizontale, et leur articulation centrale est solidaire du module de convoyage correspondant à chaque compas, au moyen d'une liaison directe et permanente appropriée, glissante, par exemple, disposée dans le plan médian du couloir correspondant.

Selon une autre disposition de l'invention, les parois sont reliées entre elles par un système de pantographe avec des losanges qui règlent automatiquement l'écartement desdites parois à une même valeur et ledit écartement est réglable par un système vis-écrou qui est disposé à chaque extrémité de l'unité de régulation, lequel système vis-écrou comprend un arbre muni de deux filetages à pas inversés coopérant avec des écrous qui sont solidaires des parois latérales, par exemple.

Toujours selon l'invention, l'unité régulatrice comporte, entre les bras de chaque compas et les bras de chaque losange du pantographe qui sont parallèles audit bras de chaque compas, un organe de liaison qui est situé dans le plan médian de chaque couloir, lequel organe de liaison est constitué d'une bielle qui coopère avec le support correspondant du module de convoyage.

Selon une autre disposition de l'invention, chaque bielle forme, avec ses parois adjacentes, avec les bras du compas et avec les bras du pantographe qui sont parallèles auxdits bras du compas, un couple de parallélogrammes déformables adjacents dont ladite bielle forme le côté commun, lequel couple de parallélogrammes permet de maintenir un parallélisme de grande précision entre lesdites parois.

Toujours selon l'invention, l'ensemble constitué du pantographe, des compas et des bielles de liaison, est installé dans la zone située à chaque extrémité de l'unité de régulation, dans un plan vertical, sous le niveau de la surface active des modules de convoyage sur lesquels circulent les récipients, et les moyens de manoeuvre de ces pantographes sont coordonnés entre eux avec une commande du type motorisée ou non.

Selon une autre disposition de l'invention, les bielles de liaison qui sont disposées entre les bras des compas et les bras du pantographe font office de glissières, lesquelles bielles coopèrent chacune respectivement avec une pièce qui fait office de support, lequel support est disposé au niveau de l'extrémité de chaque module et il comporte un alésage vertical qui lui permet de coulisser sur la bielle correspondante.

Selon une autre disposition de l'invention, le support disposé dans la zone située à chaque extrémité des modules de convoyage se présente sous la forme d'un bloc aménagé pour accueillir l'extrémité correspondante dudit module de convoyage et coopérer avec ladite extrémité, lequel support comporte deux alésages parallèles qui sont disposés horizontalement et qui coopèrent chacun avec une paire de glissières s'étendant transversalement entre les côtés latéraux de l'unité régulatrice et il comporte aussi un alésage vertical coopérant avec la bielle verticale qui relie le compas au pantographe.

Toujours selon l'invention, chaque support de module de convoyage comporte un pion disposé en saillie sur sa surface supérieure, lequel pion coopère avec un socle aménagé à l'extrémité correspondante dudit module de convoyage, lequel socle comporte un orifice qui permet de caler ledit module sur son support et ledit orifice permet aussi de faciliter le changement dudit module en cas de besoin.

Selon une autre disposition de l'invention, les parois formant les couloirs de guidage des récipients sont fixées, au niveau des zones situées aux extrémités de l'unité de régulation, sur les coulisseaux qui portent les compas et le pantographe, et cette fixation est réalisée au moyen de platines, lesquelles platines enserrent lesdites parois et sont assemblées sur lesdits coulisseaux par des moyens appropriés.

Toujours selon l'invention, l'une au moins des parois formant les couloirs de guidage des récipients comporte, du côté de l'entrée de l'unité de régulation, une petite fenêtre qui permet de surveiller et de contrôler la position des doigts avant leur insertion entre deux récipients consécutifs qui arrivent sur le module de convoyage, poussés par le convoyeur amont de gavage.

Pour pouvoir être exécutée, l'invention est exposée de.façon suffisamment claire et complète dans la description suivante qui, en plus, est accompagnée de dessins dans lesquels :
- les figures 1 et 2 correspondent à des installations susceptibles de recevoir l'unité régulatrice selon l'invention qui est dotée du système multifonctionnel de centrage des modules de convoyage et de réglage de la largeur des couloirs, et en particulier une installation qui fonctionne soit selon un mode de dégroupage des flux de récipients et de préparation des lots dénommé "SDR" (Sélection par Doigts Réglables), soit selon un mode de dégroupage et de préparation des lots dénommé "SFR" (Sélection par Flux Régulés) ;
- la figure 3 est une vue partielle, en perspective, de l'unité régulatrice montrant l'implantation du système de centrage automatique des modules de convoyage et du système de réglage de la largeur des parois qui délimitent les couloirs de passage des récipients ;
- la figure 4 représente, d'une façon partielle et plus détaillée, le mécanisme de centrage des modules de convoyage et le mécanisme de réglage des parois des couloirs ;
- la figure 5 est une vue partielle, en perspective, montrant, notamment, le mécanisme de manoeuvre d'une paroi et le mécanisme de manoeuvre du support de l'extrémité d'un module de convoyage ;
- la figure 6 représente, de façon schématique et partielle, plusieurs exemples de réglage de largeur de couloirs et la position des systèmes de réglage aussi bien pour les parois desdits couloirs que pour les modules de convoyage ;
- la figure 7 représente, sous la forme d'un schéma fonctionnel simplifié, les principaux organes qui entrent dans la composition d'une unité régulatrice équipée du système multifonctionnel de réglage de la largeur des couloirs et de centrage des supports des différents modules de convoyage dans lesdits couloirs.

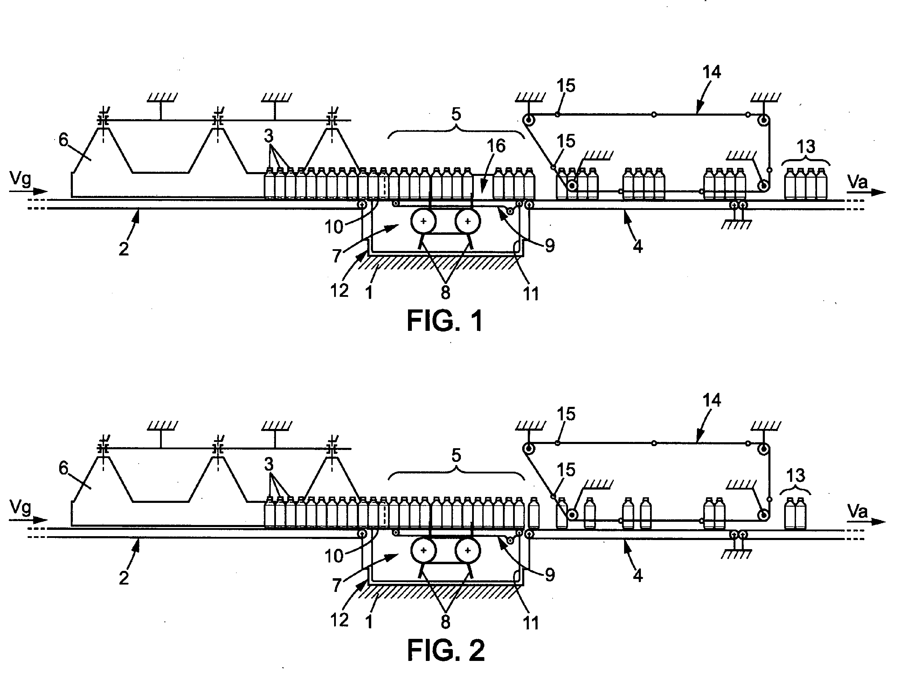

L'installation représentée figure 1 comprend un bâti 1 général sur lequel sont rassemblés :
- un convoyeur 2 amont, de gavage, à tapis sans fin, qui transporte, de façon continue et à une vitesse Vg un flux de récipients 3 et en particulier des récipients de section circulaire ou ovale, ou encore à facettes, comme, par exemple, des bouteilles, des flacons,... etc.;
- un convoyeur 4 aval, à tapis sans fin, qui avance à une vitesse Va pour évacuer les lots de récipients vers une machine de conditionnement ou autre, non représentée et,
- entre ledit convoyeur 2 amont et ledit convoyeur 4 aval, une unité 5 de régulation, laquelle unité 5 de régulation contrôle la vitesse d'avancement du flux de récipients 3.

Ces récipients 3 arrivent sur plusieurs files au niveau du convoyeur 2 amont, guidés par des parois 6 qui délimitent des couloirs et ces récipients 3 traversent ensuite l'unité 5 de régulation, dans des couloirs également, lesquels couloirs sont aménagés pour offrir une grande précision de guidage desdits récipients 3, comme détaillé dans le document WO précité.

Cette unité 5 de régulation se présente sous la forme d'un outillage interchangeable qui comprend des moyens pour contrôler et établir la vitesse de transit des récipients 3 entre le convoyeur 2 amont et le convoyeur 4 aval, lesquels moyens sont tout d'abord constitués d'un système 7 de convoyage comportant des doigts 8 de régulation qui font office de butées et ils sont également constitués de plusieurs modules 9 de convoyage qui s'étendent longitudinalement dans chaque couloir de ladite unité de régulation, entre la sole 10, ou tôle morte, qui est située à l'entrée de ladite unité 5 de régulation et qui fait la jonction avec le convoyeur 2 amont.

Les doigts 8 de régulation barrent le passage des récipients 3 dans les couloirs de l'unité 5 de régulation, faisant office de butées, et ils sont mobiles pour retenir et pour accompagner les récipients 3 dans ladite unité 5.

Le système 7 de convoyage par les doigts 8, les modules 9 de convoyage avec leur sole 10, sont solidaires d'un même châssis 11, lequel châssis 11 s'insère dans un berceau 12 qui est aménagé dans le bâti 1 général de l'installation.

La figure 1 détaillée ci-dessus concerne un mode de sélection et de dégroupage des récipients 3 dénommé SDR, c'est-à-dire Sélection par Doigts Réglables ; la figure 2 reprend les mêmes éléments pour un mode de sélection et de dégroupage différent, dénommé SFR, pour Sélection par Flux Régulé. Dans les deux cas, il s'agit de former des lots 13.

Dans le cas du mode de dégroupage SFR, représenté figure 2, les récipients 3 sont dégroupés rang par rang à l'extrémité aval de l'unité 5 de régulation et ces rangs sont repris par un dispositif de convoyage du type orbital dénommé cycleur 14, lequel cycleur 14 comporte des barrettes 15 qui s'insèrent dans l'espace formé entre deux rangs consécutifs ou, selon le cas, et en particulier selon le nombre de rangs constituant le lot, entre les groupes de rangs qui forment ledit lot.

Dans le mode de dégroupage SDR, le cycleur 14 peut également être utilisé pour effectuer un compactage longitudinal du lot 13 et selon le cas, avec un équipement approprié constitué par exemple de parois latérales, non représentées, un compactage transversal des récipients en vue de les expédier vers le convoyeur suivant qui alimente une machine de conditionnement non représentée.

Ces deux modes de sélection, SDR ou SFR, qui ont pour but la préparation des lots 13 de récipients 3, requièrent, pour obtenir une sélection et un dégroupage parfaits desdits récipients 3, une très grande précision au niveau du guidage desdits récipients 3, aussi bien pour les modules 9 de convoyage que pour les parois 16 qui délimitent les couloirs. En effet, ce sont ces parois qui réalisent le guidage des récipients mais ce guidage et le positionnement des récipients 3 dépendent également de la position des doigts 8, lesquels doigts 8 se présentent sous la forme de diapasons qui enjambent le rebord d'une fenêtre aménagée dans chaque paroi 6 et dans laquelle passent les organes supports desdits doigts 8. La précision du calage des récipients 3 par rapport aux doigts 8 dépend de la précision du centrage desdits récipients 3 dans les couloirs et c'est cette précision des récipients 3 par rapport aux doigts 8 qui conditionne la régularité du front de récipients 3 lors du dégroupage et de la formation des lots.

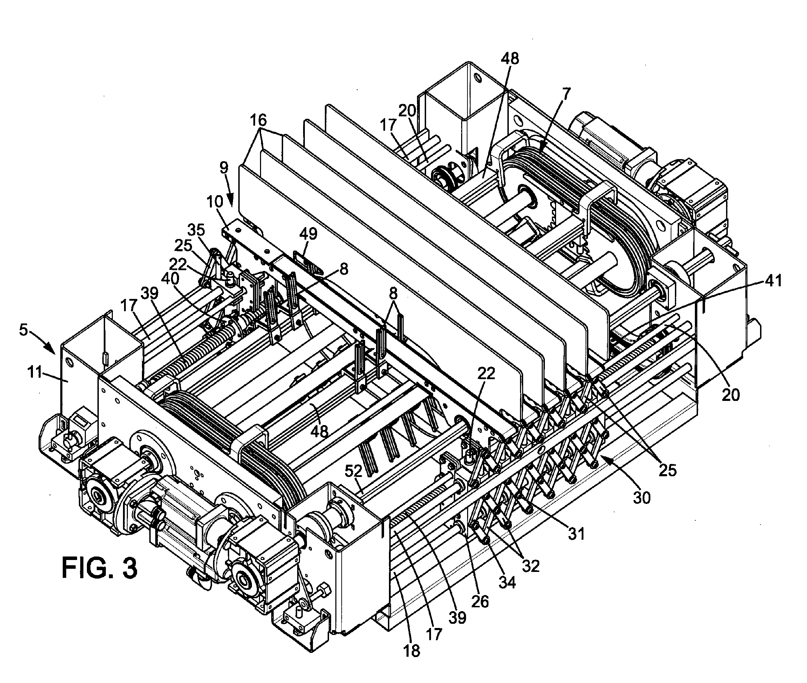

Comme représentées figure 3, des parois 16 sont disposées de part et d'autre de chaque module 9 de convoyage pour délimiter latéralement les différents couloirs de l'unité 5 de régulation. Ces parois 16 sont guidées transversalement, à l'entrée et à la sortie de ladite unité 5 de régulation, sur une paire de glissières 17 et 18, espacées verticalement.

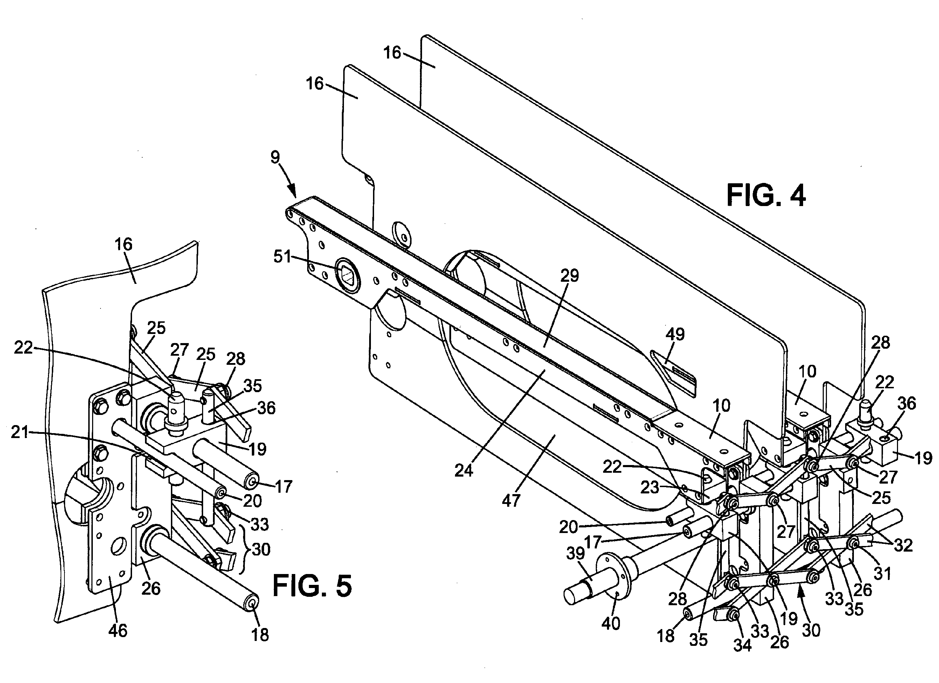

Les glissières 17 supérieures servent également au guidage transversal des différents modules 9 de convoyage. Comme représentée figure 4, l'extrémité du module 9 de convoyage est portée par une pièce qui fait office de support 19, lequel support 19 est guidé sur la glissière 17 supérieure ainsi que sur une glissière 20 complémentaire, parallèle à ladite glissière 17 et située au même niveau, vers l'intérieur de l'unité 5 de régulation. On remarque, figure 5, que le support 19 comporte une simple creusure 21, ou fente, pour coopérer avec la glissière 20 complémentaire, laquelle glissière 20 assure un simple maintien en position du support 19, une fonction d'anti-rotation.

Ce support 19 comporte un pion 22 qui réalise le centrage et le positionnement de l'extrémité correspondante du module 9 de convoyage, laquelle extrémité dudit module 9 est munie d'un socle 23 qui est aménagé pour accueillir ledit pion 22. Le socle 23 est enserré entre deux flasques 24 qui font office de châssis pour le module 9 de convoyage.

Pour maintenir ce module 9 de convoyage centré dans le plan vertical médian de son couloir, le support 19 est relié aux parois 16 qui délimitent ledit couloir, au moyen d'une paire de bras 25 de même longueur qui forment un compas, ou dièdre, entre deux parois adjacentes ; une série de compas s'étend horizontalement, sur une même ligne, de couloir en couloir, transversalement, à l'entrée et à la sortie de l'unité 5 de régulation.

Les bras 25 des compas sont de même longueur et ils ont une de leurs extrémités qui est articulée sur les parois 16 adjacentes, à un même niveau et sur une même ligne horizontale, et les autres extrémités desdits bras 25 sont réunies sur une même articulation et cette articulation centrale du compas est solidaire dudit module 9 de convoyage au moyen d'une liaison glissante disposée dans le plan médian du couloir correspondant.

Les bras 25 sont articulés sur les parois 16 et, en particulier, sur des coulisseaux 26 sur lesquels sont fixées lesdites parois 16, par des moyens qui seront détaillés plus loin. Chaque coulisseau 26 comporte, à sa partie supérieure, au niveau de la glissière 17 supérieure, un axe 27 qui reçoit l'une des extrémités des bras 25 ; l'autre extrémité de chaque bras 25 est articulée sur un axe 28 qui est commun à deux bras 25 positionnés entre deux parois 16 adjacentes ; cet axe 28 se situe dans le plan médian de chaque couloir de l'unité 5 de régulation et, en plus, il est lié au support 19 du module 9 correspondant.

L'articulation commune aux deux bras 25 au niveau du support 19, qui est matérialisée par l'axe 28, constitue, avec lesdits bras 25, le moyen de liaison entre les parois 16 et le module 9 de convoyage correspondant. Ce moyen de liaison est mobile ; il assure un guidage, du type glissant, par exemple, de l'axe 28 dans le plan médian du couloir correspondant. On obtient ainsi un lien direct et permanent entre les parois 16 et le module 9 de convoyage, ce qui permet de garantir une position optimale de ce module 9 et en particulier de sa bande 29 sans fin, laquelle bande 29 est centrée dans le plan médian du couloir correspondant.

Dans un mode préférentiel de réalisation de l'invention, cette liaison entre l'axe 28 et le support 19 du module 9 de convoyage est associée à des moyens particuliers qui permettent de régler la distance entre les parois 16 formant les couloirs, pour adapter la largeur desdits couloirs à la dimension des récipients 3 qui circulent dans ces derniers.

Pour obtenir une précision maximale au niveau de la position des parois 16, l'écartement desdites parois 16 les unes par rapport aux autres est réalisé, à l'entrée et à la sortie de l'unité 5 de régulation, au moyen d'un mécanisme comprenant, notamment, un pantographe 30 qui s'étend transversalement sous le niveau des bras 25, à hauteur de la glissière 18 inférieure. Ce pantographe 30 est constitué d'une succession de losanges qui sont disposés horizontalement sur la largeur occupée par les parois 16, lesquels losanges sont articulés, par l'intermédiaire d'axes 31, sur les coulisseaux 26 qui portent lesdites parois 16, sensiblement au niveau de la glissière 18 inférieure. Les axes 31 sont disposés au centre des croisillons formés par les bras 32 du pantographe 30 et sur les demi-bras 32 qui sont attachés aux parois 16 latérales.

Les angles libres des losanges du pantographe 30, qui se situent dans le plan médian de chaque couloir, sont articulés sur des axes 33 et 34 qui se situent de part et d'autre, respectivement au-dessus et en dessous de la ligne qui passe par les axes 31. Les axes 34 assurent une simple liaison des extrémités de deux bras 32 adjacents.

On remarque, figures 4 à 6 notamment, qu'un organe de liaison, en forme de bielle 35, s'étend entre les axes 33 des bras 32 du pantographe 30 et les axes 28 des compas formés par les bras 25. Ces bielles 35 se situent en permanence dans le plan médian de chaque couloir et elles coopèrent avec chaque pièce support 19 pour réaliser son déplacement et, en particulier le déplacement synchronisé du module 9 de convoyage avec le déplacement des parois 16 adjacentes.

Chaque support 19 comporte un alésage 36 qui est aménagé pour accueillir la bielle 35 correspondante ; cette bielle 35 se présente sous la forme d'un barreau cylindrique qui coulisse dans l'alésage 36 pour suivre les mouvements du pantographe 30 et des compas formés par les bras 25. Ces différentes bielles 35 font office d'organe suiveur, c'est-à-dire qu'elles accompagnent le mouvement des parois 16 et forcent les modules 9 de convoyage à rester centrés dans le plan médian de leur couloir qui est formé par lesdites parois 16.

Les bielles 35 ont un rôle complémentaire important vis-à-vis des parois 16 car elles constituent, entre deux parois 16 adjacentes, le côté commun d'une paire de parallélogrammes adjacents déformables.

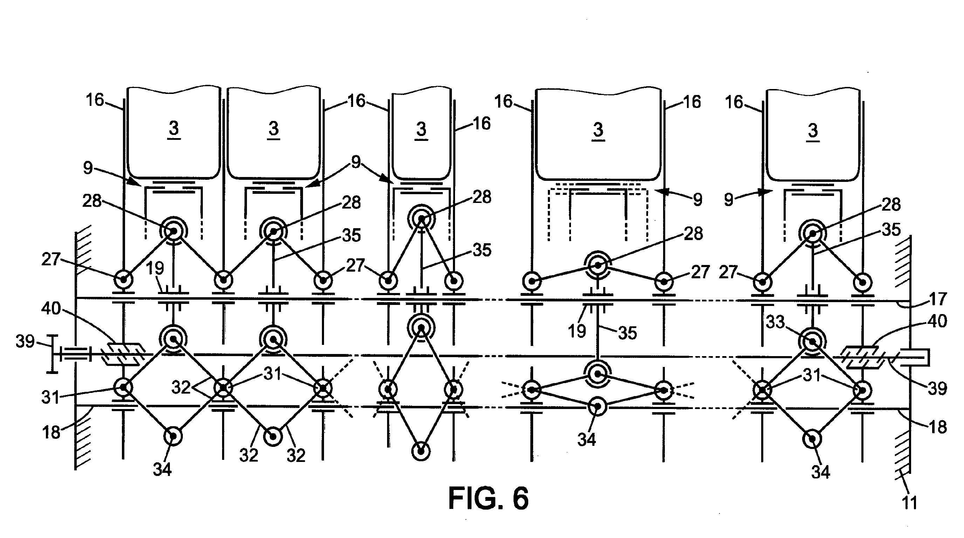

En effet, comme représenté figures 4 et 6, notamment, les parois 16 forment, avec les bras 25 des compas et les bras 32 supérieurs du pantographe 30, et avec les bielles 35, des parallélogrammes et, en particulier, une paire de parallélogrammes adjacents pour chaque couloir, entre deux parois 16 adjacentes. On obtient ainsi une très grande précision pour la position de ces parois 16 et, en particulier, pour leur parallélisme ; ces parois sont maintenues verticales et la distance qui les sépare est régulière et parfaitement uniforme.

Tous ces mécanismes de manoeuvre des parois 16 et des modules 9 de convoyage, c'est-à-dire le pantographe 30 et les compas constitués par les bras 25, sont disposés dans une zone située à chaque extrémité de l'unité 5 de régulation, sous le niveau de la surface de circulation des récipients 3.

L'extension et la rétraction du pantographe 30 s'effectuent par un système vis-écrou disposé à chaque extrémité de l'unité 5 de régulation : - un arbre 39 s'étend transversalement et il comporte deux filetages à pas inversés disposés l'un et l'autre de part et d'autre du plan médian de l'unité 5 de régulation, - et deux écrous 40 coopèrent chacun avec chaque portion de vis, lesquels écrous 40 sont, de préférence, disposés sur les parois 16 extrêmes latérales.

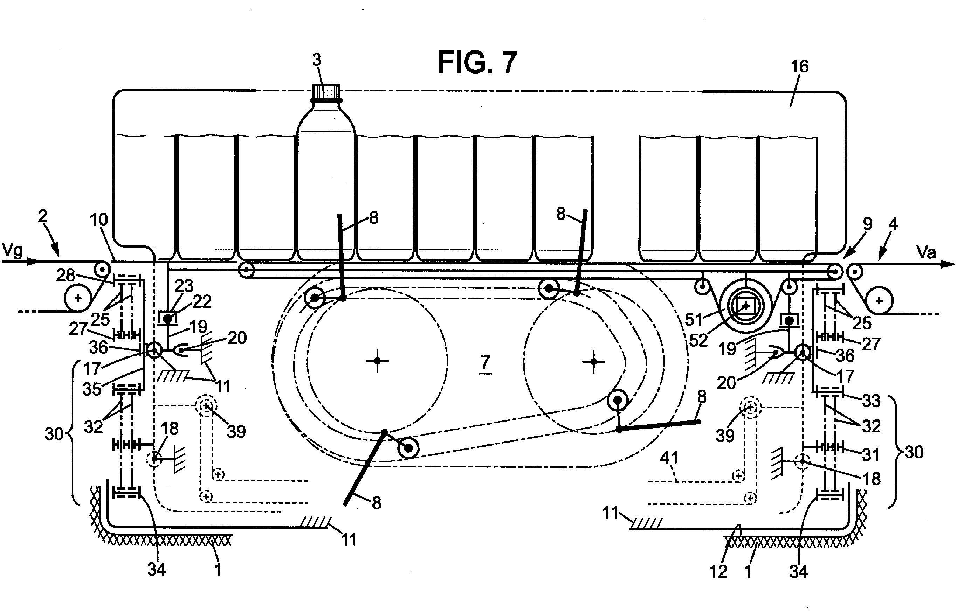

La manoeuvre des arbres 39 peut s'effectuer manuellement ou au moyen d'un organe moteur approprié. Ces deux arbres 39 sont synchronisés par une liaison appropriée du type chaîne 41 sans fin, par exemple, laquelle chaîne sans fin passe sous le système 7 de convoyage qui comporte les doigts 8 de régulation, comme représenté sur les figures 3 et 7.

Sur la figure 5, on remarque que la paroi 16 est fixée sur le coulisseau 26 qui porte l'axe 27 des bras 25 du compas et qui porte l'axe 31 du pantographe ; cette fixation de la paroi 16 sur le coulisseau 26 s'effectue au moyen de platines 46 qui enserrent ladite paroi 16, lesquelles platines 46 sont disposées de part et d'autre de ladite paroi 16 et elles sont assemblées sur ledit coulisseau 36. Les différentes parois 16 sont montées de cette façon sur chaque coulisseau 26, au niveau de chaque zone d'extrémité de l'unité de régulation.

Sur la figure 4, on remarque, représentée partiellement, une paroi 16 qui comporte une grande fenêtre 47 pour le passage du système 7 de convoyage et, en particulier, pour le passage des traverses 48, visibles figure 3, qui supportent les différents doigts 8 de régulation.

On remarque également, du côté de l'entrée de l'unité de régulation, vers la sole 10 du module 9 de convoyage, une petite fenêtre 49 qui permet de surveiller et de contrôler la position du doigt 8, avant son insertion entre deux récipients 3 consécutifs qui arrivent sur la bande 29 sans fin du module 9 de convoyage, et qui sont poussés par le convoyeur 2 amont de gavage. Cette petite fenêtre 49 est aménagée sur l'une au moins des parois 16, de préférence sur les parois latérales.

La figure 6 montre plusieurs possibilités de réglage de la largeur des couloirs et la coopération entre les compas, constitués par les bras 25, et les bras 32 du pantographe 30.

Les bras 25 sont articulés sur les coulisseaux 26 et leur articulation centrale 28 se situe dans le prolongement de la diagonale verticale des losanges qui forment ledit pantographe 30. On obtient ainsi, comme détaillé précédemment, une succession de parallélogrammes reliés entre eux, lesquels parallélogrammes sont constitués par les bras 32 de la partie supérieure du pantographe 30 et par les bras 25, avec une bielle 35 qui fait la jonction entre l'axe 28 desdits bras 25 et l'axe 33 desdits bras 32.

On remarque, toujours sur cette figure 6, que, en fonction de la largeur du couloir, on peut opérer une substitution des modules 9 de convoyage. Un module 9 de convoyage de faible largeur peut se substituer à un module 9 de plus grande largeur pour offrir une bonne stabilité aux récipients 3 pendant leur transit dans l'unité 5 de régulation.

La figure 7 représente une élévation, sous la forme d'un schéma fonctionnel simplifié, de l'unité 5 de régulation avec les principaux organes. Cette unité 5 de régulation est positionnée entre le convoyeur 2 amont et le convoyeur 4 aval et elle se présente sous la forme d'une cassette qui fait plusieurs centaines de kilogrammes.

Cette cassette comprend un châssis 11 sur lequel sont rassemblés les éléments d'accompagnement des récipients 3 à savoir le système 7 de doigts 8, les modules 9 de convoyage et les parois 16 qui forment les couloirs. Cette cassette comprend aussi les éléments qui permettent de régler la largeur desdits couloirs pour l'adapter à la dimension desdits récipients 3 et qui permettent de positionner correctement lesdits modules 9 de convoyage en les maintenant en permanence dans le plan médian de leur couloir.

Ainsi, dans la zone située à l'entrée et à la sortie de cette cassette, on trouve un mécanisme qui comprend les compas formés par les bras 25 et qui comprend le pantographe 30, lequel pantographe est couplé auxdits bras 25 au moyen de bielles 35. Ces bielles 35, qui jouent le rôle d'organe suiveur, coopèrent avec les supports 19 sur lesquels sont simplement posés les modules 9 de convoyage.

La bande 29 sans fin de ces modules 9 de convoyage est entraînée par une poulie 51, laquelle poulie 51 est elle-même entraînée par un arbre 52. Cet arbre 52 maintient les modules en place et il est extractible pour permettre leur changement lorsque, comme signalé auparavant en liaison avec la figure 6, la variation de largeur des couloirs impose un changement de ces modules 9 pour en installer un plus large ou plus étroit selon le cas.

Ce changement est grandement facilité par le montage des modules 9 de convoyage sur leur support 19, lequel montage se limite à un simple emboîtement du socle 23 sur le pion 22 qui s'étend verticalement en saillie sur chaque support 19.

On remarque aussi, figure 7, les arbres 39 qui permettent la manoeuvre des parois 16 pour régler la largeur des couloirs et qui, simultanément, réalisent et maintiennent le centrage des modules 9 de convoyage dans leur couloir respectif. Ces arbres 39 sont disposés à chaque extrémité de l'unité de régulation, vers l'intérieur, derrière les mécanismes de centrage (pantographe 30 et bras 25), et ils sont reliés entre eux, comme indiqué précédemment, au moyen d'un système de chaîne 41 sans fin qui permet de les synchroniser.

## Revendications

1. Unité régulatrice pour une installation de préparation de lots de récipients du genre bouteilles, et comportant au moins deux couloirs séparés par des parois (16) dont l'écartement est réglable, chaque couloir étant équipé d'un module (9) de convoyage qui supporte et fait avancer des récipients à réguler, laquelle unité réalise la régulation du flux de récipients au moyen de jeux de doigts (8) et est interposée entre un convoyeur (2) amont et un convoyeur (4) aval, l'unité comprenant dans une zone située à chacune de ses extrémités, entre deux parois (16) adjacentes, des moyens pour centrer chaque module (9) de convoyage, **caractérisée en ce que** ces moyens sont constitués de bras (25) de même longueur formant un compas entre deux parois (16) adjacentes, lesquels bras (25) ont une de leurs extrémités qui est articulée sur lesdites parois (16) adjacentes, à un même niveau et sur une même ligne horizontale, et les autres extrémités sont réunies sur une même articulation qui est solidaire dudit module (9) de convoyage au moyen d'une liaison glissante disposée dans le plan médian du couloir correspondant.

2. Unité régulatrice pour une installation de préparation de lots de récipients du genre bouteilles selon la revendication 1, **caractérisée en ce que** les parois (16) sont reliées entre elles par un système de pantographe (30) qui règle automatiquement leur écartement à une même valeur et ledit écartement est réglable par un système vis-écrou qui est disposé à chaque extrémité de ladite unité de régulation, lequel système vis-écrou comprend un arbre (39) muni de deux filetages à pas inversés coopérant avec des écrous (40) qui sont solidaires desdites parois (16) latérales.

3. Unité régulatrice pour une installation de préparation de lots de récipients du genre bouteilles selon la revendication 2, **caractérisée en ce qu'**elle comporte, entre les bras (25) de chaque compas et les bras (32) de chaque losange du pantographe (30), un organe de liaison qui est situé dans le plan médian de chaque couloir, lequel organe de liaison est constitué d'une bielle (35) qui coopère avec le support (19) correspondant du module (9) de convoyage.

4. Unité régulatrice pour une installation de préparation de lots de récipients du genre bouteilles selon la revendication 3, **caractérisée en ce que** chaque bielle (35) forme, avec ses parois (16) adjacentes, avec les bras (25) des compas et avec les bras (32) du pantographe (30) qui sont parallèles auxdits bras (25) des compas, un couple de parallélogrammes adjacents déformables dont ladite bielle (35) forme le côté commun.

5. Unité régulatrice pour une installation de préparation de lots de récipients du genre bouteilles selon la revendication 4, **caractérisée en ce que** l'ensemble qui est constitué - du pantographe (30), - des compas formés des bras (25) et - des bielles (35) de liaison, est installé dans la zone située à chaque extrémité de ladite unité de régulation, dans un plan vertical, sous le niveau de la surface active des modules (9) de convoyage sur lesquels circulent les récipients, et les moyens de manoeuvre desdits pantographes (30) sont coordonnés entre eux avec une commande du type motorisée ou non.

6. Unité régulatrice pour une installation de préparation de lots de récipients du genre bouteilles selon la revendication 5, **caractérisée en ce que** les bielles (35) de liaison disposées entre les compas constitués des bras (25) et le pantographe (30) font office de glissières, lesquelles bielles coopèrent chacune respectivement avec une pièce qui fait office de support (19) pour chaque module (9), lequel support (19) comporte un alésage (36) vertical qui sert de coulisse pour la bielle (35) correspondante.

7. Unité régulatrice pour une installation de préparation de lots de récipients du genre bouteilles selon la revendication 6, **caractérisée en ce que** le support (19) disposé à chaque extrémité des modules (9) de convoyage se présente sous la forme d'un bloc aménagé pour accueillir l'extrémité correspondante dudit module (9) de convoyage et pour coopérer avec ladite extrémité, lequel support (19) comporte deux alésages parallèles et disposés horizontalement coopérant chacun avec une glissière qui s'étend transversalement entre les côtés latéraux de ladite unité régulatrice et ledit support (19) comporte l'alésage (36) vertical coopérant avec la bielle (35) qui relie le compas au pantographe (30).

8. Unité régulatrice pour une installation de préparation de lots de récipients du genre bouteilles selon la revendication 7, **caractérisée en ce que** le support (19) comporte un pion (22) disposé en saillie sur sa surface supérieure, lequel pion (22) coopère avec un socle (23) aménagé à l'extrémité correspondante du module (9) de convoyage, lequel socle (23) comporte un orifice qui permet de caler ledit module (9) sur son support (19) et ledit orifice permet aussi de faciliter le changement dudit module (9) en cas de besoin.

9. Unité régulatrice pour une installation de préparation de lots de récipients du genre bouteilles selon la revendication 5, **caractérisée en ce que** les parois (16) formant les couloirs de guidage des récipients sont fixées sur les coulisseaux (26) qui portent les compas et le pantographe, et cette fixation est réalisée au moyen de platines (46) qui enserrent lesdites parois (16) et qui sont assemblées sur lesdits coulisseaux (26).

10. Unité régulatrice pour une installation de préparation de lots de récipients du genre bouteilles selon la revendication 9, **caractérisée en ce que** l'une au moins des parois (16) formant les couloirs de guidage des récipients comporte une petite fenêtre (49) qui permet de surveiller et de contrôler la position des doigts (8) avant leur insertion entre deux récipients consécutifs qui arrivent sur le module (9) de convoyage, poussés par le convoyeur (2) amont de gavage.

## Patentansprüche

1. Regulierungseinheit für eine Anlage zur Vorbereitung von Chargen flaschenartiger Behälter, umfassend zumindest zwei durch Wände (16) mit regulierbarer Beabstandung voneinander getrennte Gänge, wobei jeder Gang mit einem Fördermodul (9) ausgestattet ist, welches zu regulierende Behälter trägt und befördert, wobei die Einheit die Regulierung des Behälterstroms mit Hilfe von Fingergruppen (8) ausführt und zwischen einem vorgeschalteten Förderer (2) und einem nachgeschalteten Förderer (4) angeordnet ist, wobei die Einheit in einem Bereich, der sich an jedem ihrer Enden befindet, zwischen zwei benachbarten Wänden (16) Einrichtungen zum Zentrieren jedes Fördermoduls (9) umfasst, **dadurch gekennzeichnet, dass** diese Einrichtungen aus Armen (25) derselben Länge ausgebildet sind, die zwischen zwei benachbarten Wänden (16) einen Zirkel bilden, wobei jeweils eines der Enden der Arme (25) auf einem gleichen Niveau und einer gleichen horizontalen Linie gelenkig mit den benachbarten Wänden (16) verbunden ist und die anderen Enden an einem gleichen Gelenk, das mit dem Fördermodul (9) mittels einer in der Mittelebene des entsprechenden Gangs angeordneten Gleitverbindung fest verbunden ist, zusammengefasst sind.

2. Regulierungseinheit für eine Anlage zur Vorbereitung von Chargen flaschenartiger Behälter nach Anspruch 1, **dadurch gekennzeichnet, dass** die Wände (16) durch ein Pantographsystem (30) das ihre Beabstandung automatisch auf einen gleichen Wert reguliert, miteinander verbunden sind, wobei die Beabstandung durch ein an jedem Ende der Regulierungseinheit angeordnetes Schraubetl-Muttern-System regulierbar ist, wobei das Schrauben-Muttern-System eine Welle (39) umfasst, die mit zwei Gewinden mit entgegengesetzten Steigungen ausgestattet sind, welche mit Muttern (40), die mit den Seitenwänden (16) fest verbunden sind, zusammenwirken.

3. Regulierungseinheit für eine Anlage zur Vorbereitung von Chargen flaschenartiger Behälter nach Anspruch 2, **dadurch gekennzeichnet, dass** sie zwischen den Armen (25) jedes Zirkels und den Armen (32) jedes Rhombus des Pantographen (30) ein in der Mittelebene jedes Gangs angeordnetes Verbindungselement aufweist, wobei das Verbindungselement aus einer Schubstange (35) ausgebildet ist, die mit dem jeweiligen Träger (19) des Fördermoduls (9) zusammenwirkt.

4. Regulierungseinheit für eine Anlage zur Vorbereitung von Chargen flaschenartiger Behälter nach Anspruch 3, **dadurch gekennzeichnet, dass** jede Schubstange (35) mit ihren benachbarten Wänden (16), mit den Armen (25) der Zirkel und mit den Armen (32) des Pantographen (30), die parallel zu den Armen (25) der Zirkel sind, ein Paar verformbarer benachbarter Parallelogramme bildet, deren gemeinsame Seite durch die Schubstange (35) gebildet wird.

5. Regulierungseinheit für eine Anlage zur Vorbereitung von Chargen flaschenartiger Behälter nach Anspruch 4, **dadurch gekennzeichnet, dass** die aus - dem Pantographen (30), - den aus den Armen (25) gebildeten Zirkeln und - den Verbindungsschubstangen (35) ausgebildete Baugruppe in dem Bereich, der sich an jedem Ende der Regulierungseinheit befindet, in einer vertikalen Ebene unter dem Niveau der aktiven Fläche der Fördermodule (9), auf denen sich die Behälter bewegen, angebracht ist und die Betätigungseinrichtungen der Pantographen (30) mit einer motorisierten oder nicht motorisierten Steuerung aufeinander abgestimmt werden.

6. Regulierungseinheit für eine Anlage zur Vorbereitung von Chargen flaschenartiger Behälter nach Anspruch 5, **dadurch gekennzeichnet, dass** die Verbindungsschubstangen (35), die zwischen den aus den Armen (25) ausgebildeten Zirkeln und dem Pantographen (30) angeordnet sind, als Gleitschienen dienen, wobei die Schubstangen jeweils mit einem Bauteil zusammenwirken, das als Träger (19) für jedes Modul (9) dient, wobei der Träger (19) eine vertikale Bohrung (36) aufweist, die der jeweiligen Schubstange (35) als Führung dient.

7. Regulierungseinheit für eine Anlage zur Vorbereitung von Chargen flaschenartiger Behälter nach Anspruch 6, **dadurch gekennzeichnet, dass** der an jedem Ende der Fördermodule (9) angeordnete Träger (19) die Form eines Blocks aufweist, der angeordnet ist, um das entsprechende Ende des Fördermoduls (9) aufzunehmen und mit dem Ende zusammenzuwirken, wobei der Träger (19) zwei parallele und horizontal angeordnete Bohrungen aufweist, die jeweils mit einer Gleitschiene, welche sich quer zwischen den beiden lateralen Seiten der Regulierungseinheit erstreckt, zusammenwirken und wobei der Träger (19) die vertikale Bohrung (36) aufweist, die mit der Schubstange (35), welche den Zirkel mit dem Pantographen (30) verbindet, zusammenwirkt.

8. Regulierungseinheit für eine Anlage zur Vorbereitung von Chargen flaschenartiger Behälter nach Anspruch 7, **dadurch gekennzeichnet, dass** der Träger (19) einen über seine obere Fläche hinausragenden Zapfen (22) aufweist, wobei der Zapfen (22) mit einem Sockel (23), der am entsprechenden Ende des Fördermoduls angeordnet ist, zusammenwirkt, wobei der Sockel (23) eine Öffnung umfasst, die es ermöglicht, das Modul (9) auf seinem Träger (19) zu fixieren, und wobei es die Öffnung ferner ermöglicht, im Bedarfsfall den Austausch des Moduls (9) zu vereinfachen.

9. Regulierungseinheit für eine Anlage zur Vorbereitung von Chargen flaschenartiger Behälter nach Anspruch 5, **dadurch gekennzeichnet, dass** die Wände (16), welche die Führungslänge der Behälter bilden, an den Gleitführungen (26), welche die Zirkel und den Pantographen tragen, befestigt sind, wobei diese Befestigung mit Hilfe von Platten (46) ausgeführt ist, welche die Wände (16) einspannen und an den Gleitführungen (26) montiert sind.

10. Regulierungseinheit für eine Anlage zur Vorbereitung von Chargen flaschenartiger Behälter nach Anspruch 9, **dadurch gekennzeichnet, dass** zumindest eine der Wände (16), welche die Führungsgänge der Behälter bilden, ein kleines Fenster (49) umfasst, das die Überwachung und Kontrolle der Position der Finger (8) vor ihrer Einführung zwischen zwei aufeinanderfolgende Behälter, die, vom vorgeschalteten Zufuhrfördermodul (2) geschoben, auf dem Fördermodul (9) ankommen, ermöglicht.

## Claims

1. A regulating unit for an installation for preparing batches of bottle-type containers, and comprising at least two passages separated by walls (16) for which the distance between them is adjustable, each passage being equipped with a conveying module (9) which supports and advances the containers to be regulated, said unit achieving the regulation of the stream of containers by means of sets of fingers (8) and being placed between an upstream conveyor (2) and a downstream conveyor (4), the regulating unit comprising, in a region located at each of its ends, between two adjacent walls (16), means for centering each conveying module (9), **characterized in that** said means consists of arms (25) of the same length forming a compass between two adjacent walls (16), said arms (25) having one end which is hinged onto said adjacent walls (16), at a same level and on a same horizontal line, and the other ends coming together in a same hinge which is integrally attached to said conveying module (9) by means of a sliding connection arranged in the mid-plane of the corresponding passage.

2. The regulating unit for an installation for preparing batches of bottle-type containers according to claim 1, **characterized in that** the walls (16) are connected to each other by a pantograph (30) system which automatically adjusts the distance separating them to the same value and said distance is adjustable by a screw-nut system arranged at each end of said regulating unit, said screw-nut system comprising a shaft (39) equipped with two threads of opposite threading cooperating with nuts (40) integrally attached to said side walls (16).

3. The regulating unit for an installation for preparing batches of bottle-type containers according to claim 2, **characterized in that** it comprises, between the arms (25) of each compass and the arms (32) of each rhombus of the pantograph (30), a connecting element which is located in the mid-plane of each passage, said connecting element consisting of a connecting rod (35) which cooperates with the corresponding support (19) of the conveying module (9).

4. The regulating unit for an installation for preparing batches of bottle-type containers according to claim 3, **characterized in that** each connecting rod (35) forms, with its adjacent walls (16), with the arms (25) of the compasses, and with the arms (32) of the pantograph (30) which are parallel to said arms (25) of the compasses, a pair of adjacent deformable parallelograms in which said connecting rod (35) forms the common side.

5. The regulating unit for an installation for preparing batches of bottle-type containers according to claim 4, **characterized in that** the assembly consisting of: - the pantograph (30), - the compasses formed by the arms (25), and - the connecting rods (35), is installed in the region located at each end of said regulating unit, in a vertical plane, below the level of the active surface of the conveying modules (9) on which the containers are traveling, and the means for maneuvering said pantographs (30) are coordinated with each other by a motorized or non-motorized control unit.

6. The regulating unit for an installation for preparing batches of bottle-type containers according to claim 5, **characterized in that** the connecting rods (35) arranged between the pantograph (30) and the compasses formed by the arms (25) act as rails, said connecting rods each respectively cooperating with a part which acts as a support (19) for each module (9), said support (19) comprising a vertical borehole (36) which allows the corresponding connecting rod (35) to slide within it.

7. The regulating unit for an installation for preparing batches of bottle-type containers according to claim 6, **characterized in that** the support (19) provided at each end of the conveying modules (9) is in the form of a block arranged to accept the corresponding end of said conveying module (9) and to cooperate with said end, said support (19) comprising
two parallel boreholes arranged horizontally and each cooperating with a rail extending transversely between the lateral sides of said regulating unit, and said support (19) comprising the vertical borehole (36) cooperating with the rod (35) connecting the compass to the pantograph (30).

8. The regulating unit for an installation for preparing batches of bottle-type containers according to claim 7, **characterized in that** the support (19) comprises a pin (22) projecting from its upper surface, said pin (22) cooperating with a base (23) arranged in the corresponding end of the conveying module (9), said base (23) comprising a socket which immobilizes said module (9) on its support (19) and said socket also facilitating the changing of said module (9) if needed.

9. The regulating unit for an installation for preparing batches of bottle-type containers according to claim 5, **characterized in that** the walls (16) forming the guiding passages for the containers are attached to the slides (26) supporting the compasses and the pantograph, and this attachment is achieved by means of plates (46) which clasp said walls (16) and which are assembled onto said slides (26).

10. The regulating unit for an installation for preparing batches of bottle-type containers according to claim 9, **characterized in that** at least one of the walls (16) forming the guiding passages for the containers comprises a small window (49) which allows monitoring and verifying the position of the fingers (8) before their insertion between two consecutive containers arriving on the conveying module (9) as they are advanced by the upstream feeder conveyor (2).
